# EUROPEAN PATENT APPLICATION

(11) **EP 1 500 911 A1**
(43) Date of publication of application: **26.01.2005**
(21) Application number: 03016542.7
(22) Date of filing: 23.07.2003
(51) Int. Cl.: G01F 11/18, G01F 11/24

(54) **A device for dispensing a material from a container**

(71) Applicant: 3M ESPE AG, 82224 Seefeld (DE)
(72) Inventor: Hohmann, Arno, 81369 München (DE); Peucker, Marc, 86938 Schondorf (DE); Knee, Micheal, 82380 Peissenberg (DE); Poschmann, Dieter, 82319 Starnberg (DE); Pitsch, Rudolf, 82211 Herrsching (DE); Stenger, Angela, 82343 Possenhofen (DE); Hublé, Kai R., 82319 Starnberg (DE)
(74) Representative: VOSSIUS & PARTNER

(57) **Abstract**

The present invention relates to a device for batch-dispensing a material from a container, such as pulverulent or granular material, for example dental powder such as glass ionomer, said device comprising at least one displaceable being member displaceable between a first position and a second position, and having at least one cavity being alternately emptied and filled from said container upon displacement of said displaceable member.

## Description

### Field of the Invention

The present invention relates to a device for batch-dispensing a material from a container, such as pulverulent or granular material, for example dental powder such as glass ionomer, said device comprising at least one displaceable member being displaceable between a first position and a second position, and having at least one cavity being alternately emptied and filled from said container upon displacement of said displaceable member.

### Background of the Invention

Many dispensing devices using a displaceable member are known in the art. For example, WO 02/064006 discloses a dispensing device for batch-dispensing a granular product. The principle of one example of such a dispensing device disclosed by WO 02/064006 is schematically shown in Fig. 1 of the accompanying figures. Such a known dispensing device comprises a slideably arranged body that has two passages that are emptied and filled when the slideably arranged body is moved from a first position to a second position.

US-A-3 866 805 discloses a volumetric dispensing apparatus which is operated by rotating a portion of a cap about the axis of a container through about 90° back and forth, one path in each direction.

US-A-4 560 092 discloses variable quantity dispensing device for granular material.

DE-A-100 23 971 discloses a screw-cap device for dispensing portions of coffee or tea etc. This screw-cap device includes a slide closure being spring-loaded in the closed position and having a dosing chamber open on both sides. The spring actions result from spring leaves formed from the same material as the slide closure. The free ends of the spring leaves are supported slidingly on slide faces which run onto each other on the push-in direction.

However, prior art dispensing devices as exemplified by these prior art documents are disadvantageous if they are used with certain materials, for example powders such as dental powders because such materials usually have to be stored encapsulated from environmental conditions, especially from moisture, which prior art dosing devices cannot ensure. Furthermore such special materials result in an immediate blocking of moveable parts of the dosing mechanism.

It is therefore an object of the present invention to provide an improved dispensing device. This object is solved with the features of the claims.

In its broad aspect, the present invention provides a device for dispensing a material from a container, comprising at least one displaceable member being displaceable between a first position and a second position and having at least cavity being alternately emptied and filled from said container upon displacement of said displaceable member. According to the present invention, the displaceable member is tightly sealed against the container.

Thus, the present invention provides a tight seal and/or a tight fitting between the moveable parts. This results in various advantages of the present dispensing device over the prior art. Firstly, the dispensing device according to the present invention is substantially moistureproof. Secondly, the dispensing device of the present invention can be used to dispense very fine intractable materials, such as glass powder, i.e. an exact dosage of such material is possible with the dispensing device according to the present invention because a blocking of the moveable parts is prevented.

According to a first aspect of the present invention, the displaceable member is a moveable member.

Preferably, a displaceable member according to the first aspect of the present invention is moveably accommodated in a body member of the dispensing device, said body member being connectable to said container. The body member comprises a longitudinal axis, and the displaceable member is moveable along an axis being inclined with respect to said longitudinal axis of said body. In a preferred embodiment, the displaceable member is moveable in a direction transverse to said longitudinal axis of said body member. The displaceable member has an axis of movement, and said at least one cavity is inclined with respect to said axis of movement of said displaceable member. Preferably, the at least one cavity is arranged transverse to said axis of movement of said displaceable member.

The displaceable member of this embodiment extends along its axis of movement, and comprises at a first end thereof a circumferential sealing member for sealing said displaceable member against said body member once the displaceable member is fully accommodated in said body member. Preferably, the sealing member comprises a circumferential flange engaging a corresponding circumferential groove provided at said body member. More preferably, the circumferential flange is substantially L-shaped, and extends from that first end of the displaceable member along said axis of movement.

The dispensing device of this embodiment further comprises an activating element for moving said displaceable member. Preferably, the activating element is substantially U-shaped with the legs of the U being connected to said displaceable member. More preferably, the activating element is connected to said displaceable member such that said displaceable member is located between the two legs of the U-shaped activating element.

It is further preferred in this embodiment that the activating element and the displaceable member are integrally formed.

The displaceable member of this embodiment further comprises at a first end thereof a web element being arranged transverse to said axis of movement of said displaceable member. Preferably, the two ends of said web element extend beyond the circumference of the displaceable member, and the activating element is connected to said extending end portions of said web element. More preferably, the activating element is connected to said web element by means of a hinge.

The dispensing device of this embodiment further comprises a retaining element for urging said displaceable member back to its fully accommodated position. Preferably, the retaining element is a substantially U-shaped retaining or part-circular-shaped spring element. Alternatively, the retaining element is an O-ring or elastic band. Preferably, the retaining element is connected to said displaceable member in the area of its first end, and surrounds said body member.

The dispensing device further preferably comprises a locking element for releasable locking the displaceable member to said body and for generating a contact force between the sealing member and said body in its accommodated position in order to achieve a tight sealing during storage of the container.

According to a second aspect of the present invention, the displaceable member is a rotatable member. The dispensing device of the second aspect of the present invention comprises a body member, and a fixing member, said displaceable member being a rotor, said fixing member being provided for fixing said rotor to said body member such that said rotor is freely rotatable. Preferably, the body member comprises an upper end and a bottom end connected by a circumferential wall, said bottom end being adapted to be mounted on said container, said upper end comprising a radially extending ring shaped portion and an axially extending center post, said ring shaped portion and said center post being connected by a ring shaped recess forming a ring shaped chamber around said center post. The bottom of said ring shaped recess comprises an opening for forming a passage to the interior of said container. Preferably, the rotor comprises a disk-shaped plate portion comprising a center hole for alignment with said center post of said body member, and an axially extending circumferential wall. The plate portion of said rotor comprises a plurality of cavities, preferably three, being at one end thereof alignable with said opening in said ring shaped recess of said body member.

The fixing member of the present dispensing device comprises a central fixing element for twist locked fixing said fixing member to said body member through said center hole of said rotor. Preferably, the fixing element provides for a snap connection to the center rod and generates a contact pressure upon the rotor, thus causing a tight seal between the movable and non-movable parts of the device.

Preferably, the fixing member comprises at least one eccentric aperture. The fixing element is arranged such that a cavity of said rotor being aligned with said opening in said body member is at that time covered by said fixing member. The aperture allows a cavity not being aligned with said opening in said body member to be exposed to the exterior of said device. Preferably, the fixing member comprises two apertures spaced from each other at a angle of 120°.

With the dispensing device of the second aspect of the present invention, the cavities are filled and emptied sequentially while said rotor is turned.

The body member further preferably comprises at least one positioning detent for defining a dosing position of said rotor.

Preferably, the body member is glue molded to said container.

An alternative dispensing device according to the second aspect of the present invention comprises a body member, said displaceable member being a rotor, said rotor being centrically or eccentrically accommodated in said body member. In this alternative embodiment, the body member comprises a bottom portion and an upper portion being spaced from each other by a side wall portion for forming a space for accommodating said rotor between said bottom portion and said upper portion. The bottom portion comprises an opening for forming a passage from the interior of said container to said accommodating space. Preferably, the rotor comprises two cavities being alternately alignable with said opening, said cavities extending through said rotor. In this alternative dispensing device, the upper portion of said body member covers said rotor such that the cavity being aligned at one end thereof with said opening in said body portion is at its open end closed by said upper portion.

Preferably, the rotor is moveable in said body member in clockwise or anticlockwise direction.

Preferably, the rotor is press-fit into said body member in such a way that a contact pressure between the moveable and non-movable parts is generated in order to achieve a tight sealing of the container but at the same the movable parts are still displaceable by manual operation.

A further alternative design of a dispensing device according to the second aspect of the present invention comprises a displaceable member being essentially circular shaped and comprising a plurality of segments, each defining a cavity. The circular displaceable member is arranged such that, at one time, one cavity is aligned with the interior of said container and another cavity is exposed to the exterior of the dispensing device. Preferably, the circular displaceable member is arranged such that said cavities defined in the plurality of segments are filled from said container essentially in radial direction, and said cavities defined in said plurality of segments are emptied to the exterior of said device substantially in radial direction.

Preferably, the dispensing device of this alternative further comprises an activator for stepwise rotational movement for said displaceable member.

According to a further alternative design, the second aspect of the present invention comprises a displaceable member being a bevel wheel, comprising at its conical surface at least one cavity. The at least one cavity is arranged such that at one position of said bevel wheel the cavity is exposed to the interior of said container, and at a second position that cavity is exposed to the exterior of said device.

According to a third aspect of the present invention, the dispensing device comprises a first moveable member comprising a first cavity and a second moveable member comprising a second cavity, and a connecting element connecting said first and second moveable members, such that movement of said first moveable member is transferred to said second moveable member. Preferably, said connecting member is a baffle. With the present dispensing device, in a first position of said device, said first cavity of said first moveable member is aligned with a first through-hole to the interior of the container, and said second cavity of said second moveable is exposed to the exterior of said device, and wherein, in a second position of said device, said first cavity of said first moveable member is exposed to the exterior of said device, and said second cavity of said second moveable member is aligned with a second through-hole to the interior of said container. Preferably, a press-fit is provided between said moveable members and the housing of said device.

According to a fourth aspect of the present invention, the displaceable member is pivotable. Preferably, the displaceable member is disk-shaped, comprising a first surface and an opposing second surface, and comprising at least one cavity provided at the lateral side of said displaceable member. The displaceable member is alternately pivotable between two end positions, wherein in one end position said at least one cavity is exposed to the interior of said container, and in the other end position, the at least one cavity is exposed to the exterior of the device. Preferably, the displaceable member further comprises a second cavity being provided laterally opposite to said first cavity, wherein in each end position of the pivotable displaceable member, one cavity is exposed to the interior of said container, and the other cavity is exposed to the exterior of the device.

The dispensing device further comprises a body member accommodating said displaceable member, said displaceable member being press-fit to said body member.

The dispensing device according to the present invention is particularly usable with pulverulent or granular materials, like glass ionomers (e.g., glass ionomer cements), resin modified glass ionomers, composite materials, epoxide materials, chelate cements, carboxylate cements, alginate materials, biochemical granules, or granules used in biochemical products. Typical grain sizes in the present invention are in the range of d50 = 20 - 130 µm. d50 means that 50% of the particles have a grain size smaller or equal said value.

### Brief Description of the Drawings

These and other features and advantages of the present invention will become more apparent from a detailed consideration of the invention when taken in conjunction with the drawings in which:
- Fig. 1: shows a first embodiment of the present invention having a moveable displaceable member;
- Figs. 2a, b: show a second embodiment of the invention having a rotatable displaceable member;
- Figs. 3a-c: show a third embodiment of the present invention having a pivotable displaceable member;
- Fig. 4: shows a forth embodiment of the present invention having a bevel-like rotatable displaceable member;
- Figs 5a-d: show a fifth embodiment of the present invention having a rotatable displaceable member being rotatable clockwise or anticlockwise;
- Figs. 6a, b: show a sixth embodiment of the present invention wherein the displaceable member comprises a body member, a rotatable rotor and a fixing member;
- Fig. 7: shows a seventh embodiment of the present invention wherein the displaceable member consists of two baffle-type slides;
- Fig. 8: shows the body member and the displaceable member of an eighth embodiment of the present invention;
- Fig. 9: shows the dispensing device of the eighth embodiment in assembled condition;
- Fig. 10: shows a cross-sectional perspective view of the eighth embodiment of the present invention according to Fig. 9;
- Fig. 11: shows a further cross-sectional perspective view of the eighth embodiment according to Fig. 9 with the displaceable member being in its second position;
- Fig. 12: shows a preferred use of a dispensing device according to the eighth embodiment of the present invention;
- Fig. 13: shows an alternative of the eighth embodiment of the present invention with a displaceable member being inclined with regard to the longitudinal axis of the dispensing device;
- Fig. 14: shows a cross-sectional perspective view of the alternative dispensing device according to Fig. 13 with the dispensing device in a first position;
- Fig. 15: shows a cross-sectional perspective view of the alternative dispensing device of Fig. 13 with the dispensing device in a second position;
- Fig. 16: shows a cross-sectional perspective view of a ninth embodiment of the present invention similar to the eighth embodiment with a further displaceable member in assembled condition and a cap;
- Fig. 17: a perspective view onto the eighth embodiment according to Fig. 16;
- Fig. 18: a tenth embodiment of the present invention;
- Fig. 19: a first alternative of the tenth embodiment of the present invention; and
- Fig. 20: a second alternative of the tenth embodiment of the present invention.

### Detailed description of the Drawings

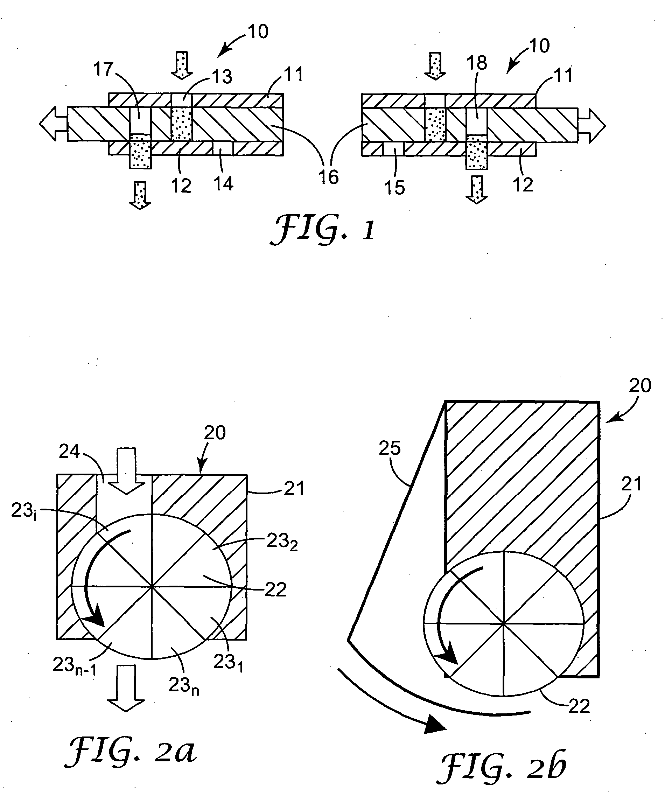

Fig. 1 shows a first preferred embodiment of a dispensing device of the present invention. The dispensing device 10 shown in Fig. 1 comprises a displaceable member 16, that is accommodated in a body member having an upper portion 11 and a lower portion 12 (it is to be noted that the terms "upper portion" and "lower portion" are only used in the present specification to facilitate the explanation of the embodiment shown, for example, in Fig. 1 and it is to be noted that these terms are not intended to be in any way limiting with respect to the orientation of the dispensing device). The displaceable member 16 of the dispensing device shown in Fig. 1 comprises two cavities 17 and 18 that extend across the longitudinal direction of the displaceable member. Furthermore, the upper portion 11 of the body member comprises a first aperture 13, and the lower portion 12 of the body member comprises a second aperture 14 and third aperture 15. The three apertures 13, 14, 15 of the body member and the two cavities 17, 18 of the displaceable member 16 are spaced from each other such that in a first position of the displaceable member (as shown in the left-hand drawing of Fig. 1), the first cavity 17 is aligned with the third aperture 15 in order to dispense the material contained in the first cavity 17, and the second cavity 18 is aligned with the first aperture 13 so that the second cavity 18 is filled from the container (not shown). The right-hand drawing of Fig. 1 shows the displaceable member 16 in its second position. In this second position of the displaceable member 16, the second cavity 18 filled through first aperture 13 from the container in the first position of the displaceable member is now emptied, and the material contained in the second cavity 18 is dispensed to the exterior of the dispensing device. At the same time, the first cavity 17 is re-filled from the container through aperture 13.

The displaceable member 16 is accommodated in the body member of the dispensing device 19 by means of a press-fit. In other words, a tight seal and/or a tight fitting is provided between the displaceable member and the container. The effect of such a tight seal/tight fitting is that, on the one hand, the material contained in the container can only enter the cavities of the displaceable member but cannot enter a potential space between the displaceable member and the surrounding body member, so that a blocking of the movement of the displaceable member is prevented. On the other hand, the container is closed in an air-tight manner so that no moisture can enter the container through the dispensing device. However, the press-fit still allows movement of the displaceable member.

Figs. 2a and 2b show a second preferred embodiment of a dispensing device of the present invention. In this embodiment, the displaceable member 22 of the dispensing device 20 is provided in the form of a circular element comprising a plurality of segments, each defining a cavity 23₁, 23₂....23ₙ₋₁, 23ₙ. The circular displaceable member is held in a body member 21 of the dispensing device 20 such that the circular displaceable member is rotatable about its center axis. Preferably, the circular displaceable member 22 is rotatable in a stepwise manner. Furthermore, the circular rotatable displaceable member 22 is arranged in the dispensing device such that material to be dispensed enters the displaceable member 22 through a passage 24 from a container substantially in radial direction. If the displaceable member is rotated in clockwise or anticlockwise direction, each cavity 23ᵢ filled through passage 24 rotates to a position where the cavity is exposed to the exterior of the dispensing device 20, and the cavity is emptied again. The emptying of the cavities also takes place in a substantially radial manner. This radial filling and radial emptying has the advantage that the dispensing device of the second preferred embodiment can be made very compact, and the displaceable member 22 can be tightly sealed against the container or tightly fitted into the body member of the displaceable member, respectively. Apart from the two cavities being filled and emptied at one time, all cavities, in particular all filled cavities, are tightly sealed against the body member of the displaceable member, and also the empty cavities are tightly sealed against the body member 21 so that no material entering the dispensing device from the container through passage 24 can reach a location where it would block movement of the displaceable members. Any material is only allowed to enter the cavity being in alignment with passage 24.

Preferably, the dispensing device 20 of this preferred embodiment is provided with an actuator, for example a lever that activates the displaceable member, for example by means of a ratchet mechanism, and thus provides a stepwise rotation of the displaceable member in one direction only. It is preferred in this embodiment that the stepwise rotation is possible in one direction only (i.e., either clockwise or anticlockwise) because this further enhances the tight seal.

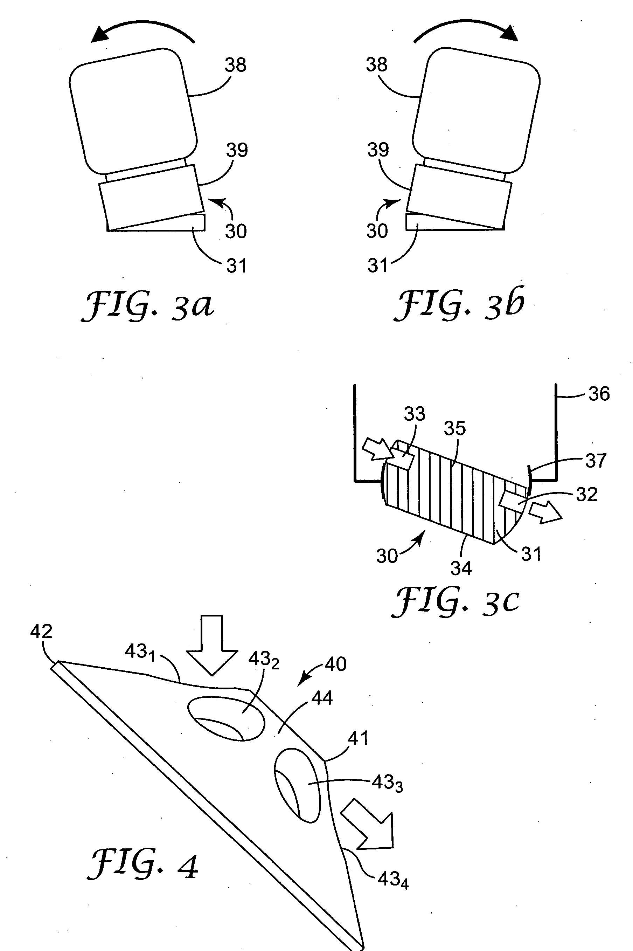

Figs 3a through 3c show a third preferred embodiment of the dispensing device of the present invention. This preferred embodiment comprises a pivotable displaceable member 31. Fig. 3a shows the container 38 with dispensing device 30 with a displaceable member 31 in a first position. Fig. 3b shows the same arrangement of container 38 and dispensing device 30 with the displaceable member 31 in a second position. This pivotable movement of the displaceable member is shown in more detail in Fig. 3c. The displaceable member 31 of this preferred embodiment is essentially disk-shaped and comprises a first surface 34 and opposite second surface 35. In the embodiment shown in Fig. 3c, the displaceable member 31 comprises two cavities 32 and 33 provided at the circumference of the displaceable member at opposite positions. Although this embodiment shows two cavities, it is to be noted that even a single cavity would result in a functional dispensing device.

The body member 39 of the dispensing device 30 of this embodiment comprises a wall portion 36 and a holding portion 37. The holding portion 37 holds the displaceable member 31 in its position. Again, like in the other embodiments of the present invention, the displaceable member is tightly held by the holding member 37, and is thus tightly sealed against the interior of the container. Nevertheless, the tight seal allows the pivotional movement of the displaceable member. The holding member 37 is designed such that in a first end position of the alternately pivotable displaceable member as shown in Fig. 3c, one cavity 33 is exposed to the interior of the body member and container in order to be filled with the material to be dispensed. At the same time, material contained in the other cavity 32 can be dispensed from the dispensing device. A pivotional movement of the displaceable member 31 would expose cavity 32 to the interior of the container, and would allow that material contained in the other cavity 33 is dispensed.

Fig. 4 shows a fourth embodiment of a dispensing device of the present invention. In particular, Fig. 4 shows the displaceable member 44 only. In this embodiment, the displaceable member 44 is in the form of a bevel wheel, comprising a first end portion 41 having a first diameter, and a second end portion 42 comprising a second diameter, said second diameter being larger that said first diameter so that a conical surface is formed. The bevel wheel of this embodiment comprises at least one cavity 43₁, 43₂, 43₃ and 43₄ at the conical surface thereof. The bevel wheel is held in the dispensing device such that material to be dispensed enters a cavity at a first position of the bevel wheel (as shown by the vertical arrow in Fig. 4). Upon rotational movement of the bevel wheel, the filled cavity is rotated to a second position (as indicated by the second arrow). At that second position, the material contained in the cavity is dispensed. The bevel wheel is also tightly sealed against the interior of the container. This is facilitated by the smooth conical surface.

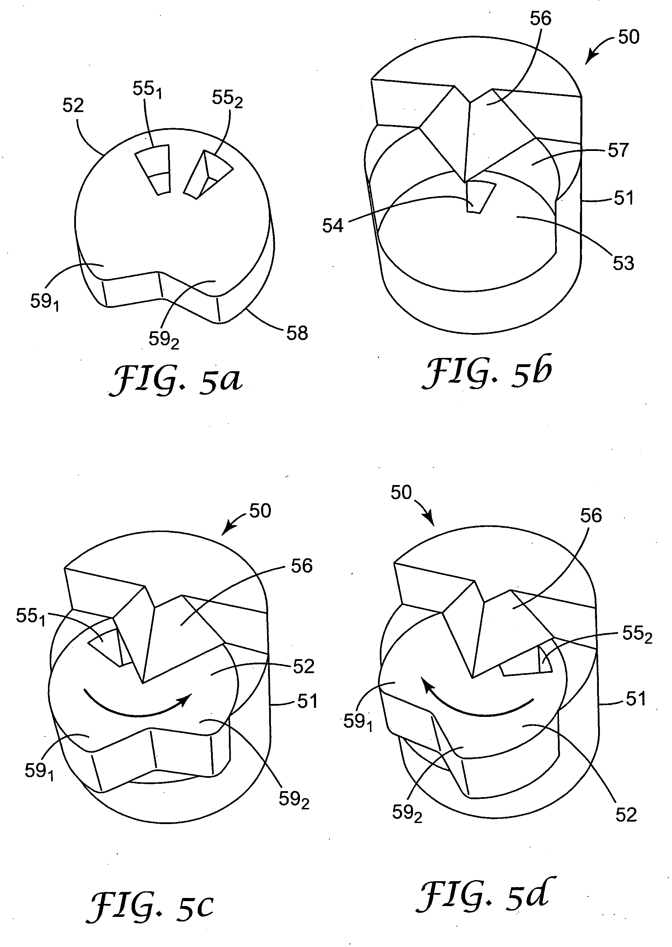

A fifth preferred embodiment of a dispensing device 50 of the present invention is shown in Figs 5a through 5d. Fig. 5a shows a rotor 52, and Fig. 5b shows a body member 15 of the dispensing device 50. The body member 51 comprises a bottom portion 53 and an upper portion 56. The bottom portion 53 and the upper portion 56 are spaced from each other by a side wall portion 57. In the bottom portion, and opening 54 is provided for forming a passage from the interior of the container to the space between the bottom portion 53 and the upper portion 56.

The rotor 52 is sized and shaped to fit into the space formed by the body member. Furthermore, the rotor 52 comprises two cavities 55₁ and 55₂ that have a cross-section that is substantially identical to the cross-section of opening 54 provided in the body member 51. Furthermore, the rotor 52 comprises two activating portions 59₁ and 59₂ which can be pushed by the user to provide a rotational movement of the rotor in clockwise or anticlockwise direction.

Figs 5c and 5d show the entire assembly of the body member and rotor. The rotor is press-fit to the body member in order to provide a tight seal so that material to be dispensed can be dispensed only through the opening 54 and the cavities 55₁ and 55₂ of the rotor. Due to the tight seal, no material can enter any space between the body member and the rotor, for example at the side wall portion 57 of the body member. This prevents a blocking of the movement of the rotor and also prevents that moisture enters the container through the dispensing device.

In the first position of the rotor 52 shown in Fig. 5c, the second cavity 55₂ is aligned with the opening 54 (not shown in Fig. 5c). Furthermore, the first cavity 55₁ is exposed to the exterior of the dispensing device so that material contained in said cavity can be dispensed. If the rotor is now rotated by applying a force on first activating portion 59₁, the rotor is rotated in clockwise direction to a second position (see Fig. 5d). In the second position, the material contained in second cavity 55₂ can now be dispensed. At the same time, first cavity 55₁ is in alignment with opening 54 (not shown in Fig. 5d) in order to refill the first cavity 55₁. This process can be repeated until the container is empty and all material is dispensed.

The rotor can either be accommodated in the body member in an eccentric or centric manner.

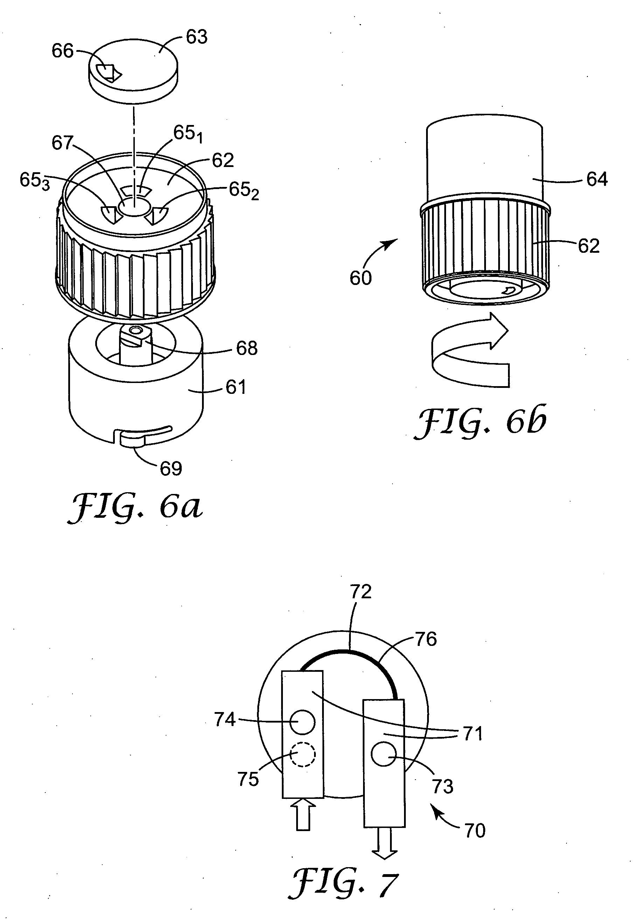

Figs 6a and 6b show another preferred embodiment of a dispensing device 60 of the present invention. Fig. 6a shows an exploded view of the elements of the dispensing device 60, i.e. body member 61, rotor 62 and fixing member 63. Fig. 6b shows the assembled dispensing device connected to the container 64.

The body member 61 comprises a central rod 68. Furthermore, the rotor 62 comprises a central hole 67. Finally, the fixing member 63 comprises a fixing element (provided at the underside of the fixing member and thus not shown in Fig. 6a). The fixing element of the fixing member 63 is connected to the central rod 68 of the body member so that the rotatable rotor is axially fixed but still rotatable. As shown in Fig. 6a, the rotor 62 comprises three cavities 65₁, 65₂ and 65₃, preferably spaced from each other at an angle of 120°. These cavities are filled and emptied sequentially while the rotor is turned. The cavities can be filled through an opening (not shown) provided in the recess between the central post 68 and the surrounding ring-shaped portion of the body member 61. The fixing member, in addition to fixing the elements together, covers the cavities. However, the fixing member 63 comprises an eccentric aperture 66 that allows that material to be dispensed contained in one cavity can be dispensed. The other cavities are covered. During movement of the rotor, the cavities are sequentially aligned with aperture 66 so that the cavities can sequentially be emptied through aperture 66.

Preferably, the fixing member 63 comprises two apertures that are spaced from each other at an angle of 120°. This allows the rotor to be rotated clockwise or anticlockwise without having idle positions within the movement of the rotor.

Preferably, the fixing member is snapped into the central rod 68 of body member 61.

The rotor is axially held on the body member by the fixing member in order to provide a tight seal between movable and non-movable parts.

Preferably, body member 61 comprises a positioning detent 69 that defines a dosing position of the rotor. Preferably, three detents are provided and spaced from each other at an angle of 120° (if three cavities are present). Due to these sprag clutches, the rotor snaps in at each of the (preferably) three dosing positions. As an advantageous side effect, due to the vibration of the snap mechanism, the material to be dispensed easily flows into the cavity at the filling position of the rotor.

It is preferred that the positioning detents do not prevent rotation in the opposite direction. Rotation of the rotor in two directions is particularly advantageous if the fixing member comprises two apertures. In this case, material can be dispensed by rotating the rotor back and forth from a first to a second position.

It is preferred that the body member is connected to the container 64 by means of a glue molding process. This is advantageous because this eliminates the necessity of a threaded mold core which would increase the cycle time of the molding process.

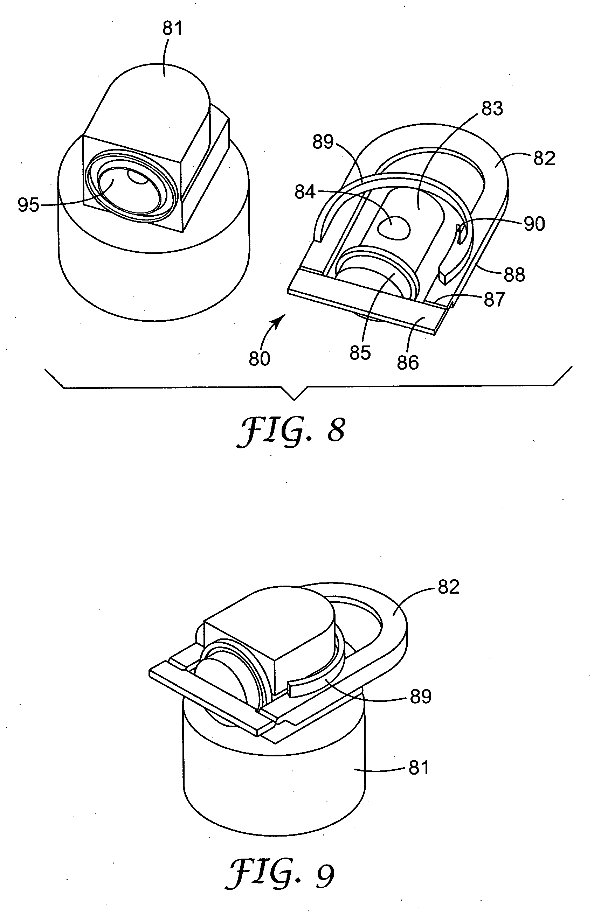

Fig. 7 shows the seventh preferred embodiment of dispensing device 70 of the present invention. In this embodiment, the dispensing device comprises a first moveable member 71 and a second moveable member 71. Each moveable member comprises a cavity, i.e. cavities 73 and 74. The two moveable members are connected by means of a baffle 72. In particular, the two moveable members are connected so that a movement of one moveable member is transferred to the other moveable member by baffle 72. This is shown in Fig. 7 by means of the two arrows. Once the left-hand moveable member is moved into the dispensing device, this movement is transferred to the right-hand moveable member, and this moveable member is moved outwards. Reference numeral 75 denotes an opening that forms a passage to the container. Thus, in the position shown in Fig. 7, the opening 75 is covered by moveable member 71. At the same time, cavity 73 is in alignment with another opening (not shown because it is covered by cavity 73) to the container in order to be filled with the material to be dispensed.

There is a press-fit between the two moveable members and the housing of the dispensing device 70 accommodating the two moveable members 71 so that a tight seal or tight fitting is provided in order to avoid that moisture enters the container or that material blocks movement of the moveable members.

The baffle 72 is preferably provided in the form of a plastic stripe that is guided along a cylindrical wall 76 in order to transfer the force applied on one moveable member to the other moveable member.

The advantage of the embodiment shown in Fig. 7 is an optimized operation if compared to a linear slide principle having just one moveable member.

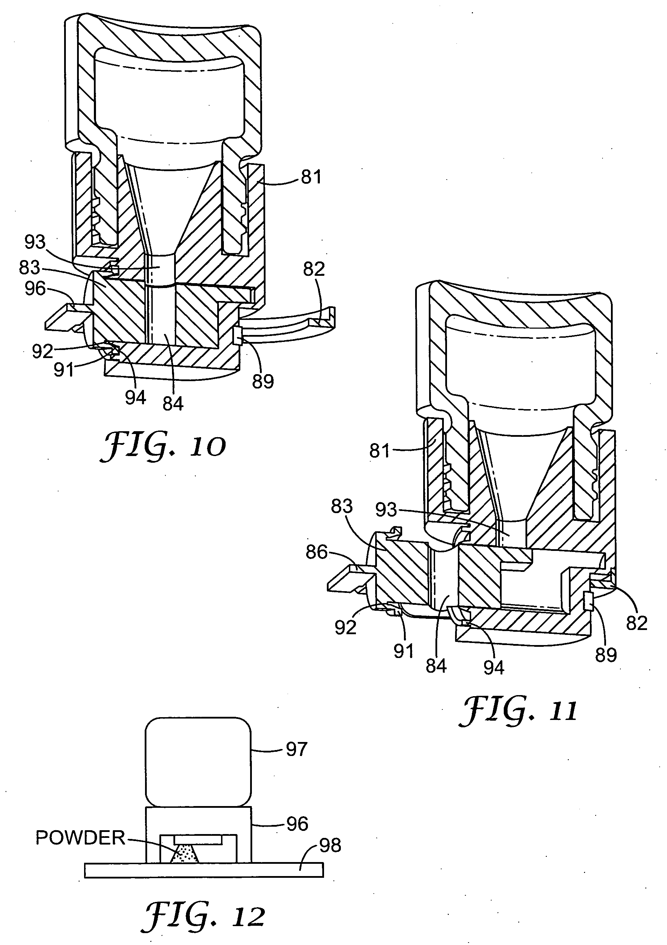

Fig. 8 shows an eighth embodiment of the present invention, i.e. dispensing device 80. In particular, dispensing device 80 is shown in an exploded view. Dispensing device 80 comprises body member 81 and displaceable member 83. Body member 81 comprises an opening or bore 95 for accommodating displaceable member 83. In the embodiment shown in Fig. 8, displaceable member is in the form of a tubular element. A cavity 84 is provided in the displaceable member 83 transverse to the longitudinal axis of the displaceable member, i.e. transverse to the axis of movement of the displaceable member. Displaceable member 83 is moveable in a direction transverse to the longitudinal axis of the body member 81 of the dispensing device 80 so that in a first position (shown in Fig. 10), the cavity 84 can be filled from the container, and in a second position (Fig. 11) the material can be dispensed.

The dispensing device 80 of this embodiment further comprises an activating element 82, for example a pusher, for moving the displaceable member between its two end positions. As shown in Fig. 8, the pusher is preferably provided in form of an "U" and is connected to a first end 85 of the displaceable member 83 by means of a web element 86. The web element 86 extends transverse to the longitudinal direction of the displaceable member 83, and preferably extends beyond the circumference of the displaceable member, as shown in Fig. 8. Thus, the U-shaped pusher can be connected to the web element 86 so that the displaceable member 83 is located within the two legs of the U-shaped pusher. The pusher can be used to move the displaceable member 83 out of the bore 95 of the body member 81, and back to its initial position. Furthermore, a retaining element 89 is provided. The retaining element is substantially U-shaped or part-circular shaped. In the embodiment shown in Fig. 8, the retaining element is in the form of a retaining spring that is connected at its two ends to the pusher. As shown in Figs 9 and 10, the retaining spring surrounds the body member. If the displaceable member 83 is moved to its dispending position (as shown in Fig. 11), the retain spring urges the displaceable member 83 back to its filling position (see Fig. 10).

In this embodiment of the present invention, the displaceable member is loosely accommodated in the bore 95 of body element 81. A tight seal against the interior of the container is in this embodiment provided by a sealing member 91. The sealing member 91 is provided at the first end 85 of the displaceable member 83, and is circumferentially provided. In the embodiment shown in Fig. 10, the sealing member is in the form of a L-shaped flange that extends along the longitudinal axis of the displaceable member 83. The free end of the flange is engaged in a circumferential groove 94 provided at the body portion around bore opening 95. Furthermore, the inner rim of groove 94 is engaged in the groove 92 formed by the L-shaped flange. Thus, if the displaceable member 83 is in its filling position (see Fig. 10), and the cavity 84 is aligned with passage 93, the displaceable member is tightly sealed against the interior of the container. This ensures a tight seal during storage of the container with the dispensing device. Such a circumferential seal insures that powder does not get in contact with the seal or inside the groove 94 during dosing, thus keeping the seal clean and tight.

Preferably, in order to provide an inexpensive solution for injecting molding, the retain spring 89 is made as in integral part of the pusher 82. And an advantage of such a retain spring is that the "compression" characteristic is constant over the travel of the displaceable member instead of being progressive (common springs have progressive characteristics). The separate locking member 90 is provided to ensure that the displaceable member 83 is held in the closed position during storage of the container. The spring member 90 is arranged so that it is only in operation when the displaceable member is close to its final filling position.

In order to avoid relaxation of the springs during storage, and in order to enable an assembly of the dispensing device of this embodiment, the pusher 82 is connected to the web element 86 by means of hinges 87 which makes it possible to disengage the displaceable member from the body member.

The seal as used in this embodiment is further advantageous since the seal is loaded and unloaded in direction of movement of the displaceable member. In case the seal would act in radial direction between the displaceable member and the body member, multiple use and displacement of the displaceable member would result in a wear of the seal.

As shown in Fig. 12, the dispensing device is preferably provided with a cap 96 which has an open end opposite to container 97 so that during dosing of the material to be dispensed, the cap can be directly paced onto a pad 98.

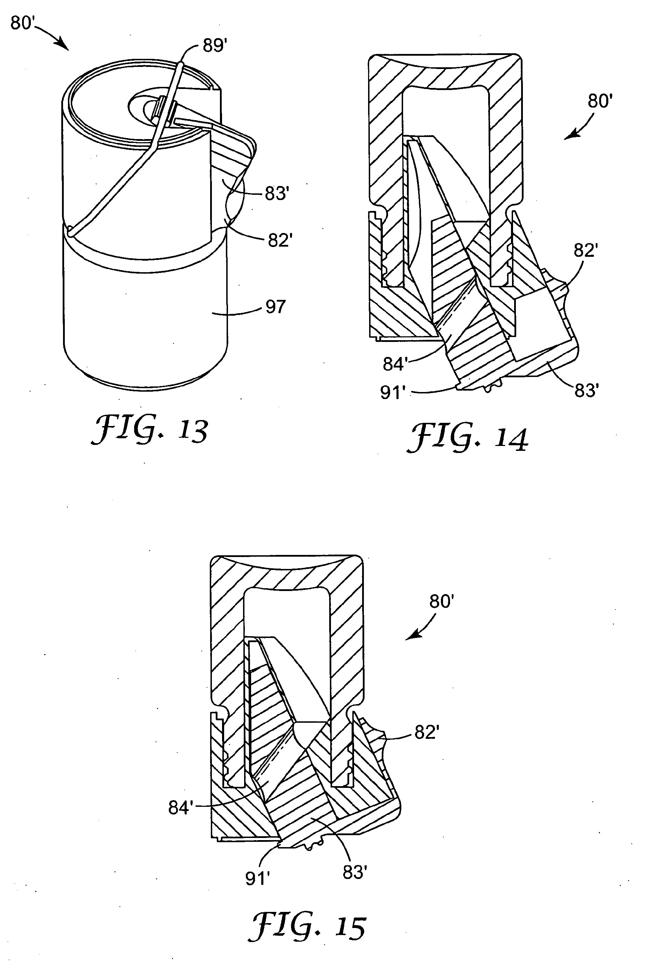

Figs 13 to 15 show an alternative design of the eighth embodiment of the present invention. In particular, Figs 13 to 15 show dispensing device 80'. In this alternative design, the displaceable member 83' is not moveable transverse to the longitudinal axis of the body member; rather, the direction of movement is inclined to the longitudinal axis of the body member. The displaceable member 83' comprises a cavity 84' that is inclined to the axis of movement of the displaceable member 83', and also with respect to the longitudinal axis of the entire dispensing device 80'. The displaceable member 83' comprises a pusher 82' that is integrally formed with the displaceable member 83'. In use, the displaceable member 83' is basically pushed by the pusher 82' parallel to the axis of movement of the displaceable member so that the displaceable member is moved from its filling position (shown in Fig. 15) to its dispensing position (shown in Fig. 14). In order to allow an easy movement back to the filling position, a retaining member in the form of an O-ring or elastic band 89' is provided (see Fig. 13). The O-ring is connected to the displaceable member 83' and surrounds the body member. The tight seal between the displaceable member 83' and the interior of the dispensing device 80' and the container is provided by sealing element 91'. In the filling position of the displaceable member 83', the O-ring (elastic band) biases the seal 91' against the body member of the dispensing device. Thus, a tight seal is provided.

The inclined arrangement of the displaceable member 83' is advantageous in that it facilitates the transport of the material during the dosing operation and also provides a more ergonomic operation of the dispensing device.

The embodiments of Figs. 9 to 15 are advantageous since the displaceable member 83, 83' of these embodiments comprises the minimum number of openings, namely two openings, i.e., the passage to the container and the dispensing opening. Thus, merely one opening needs to be sealed, i.e., the opening 95 which is the only way moisture can enter into the container.

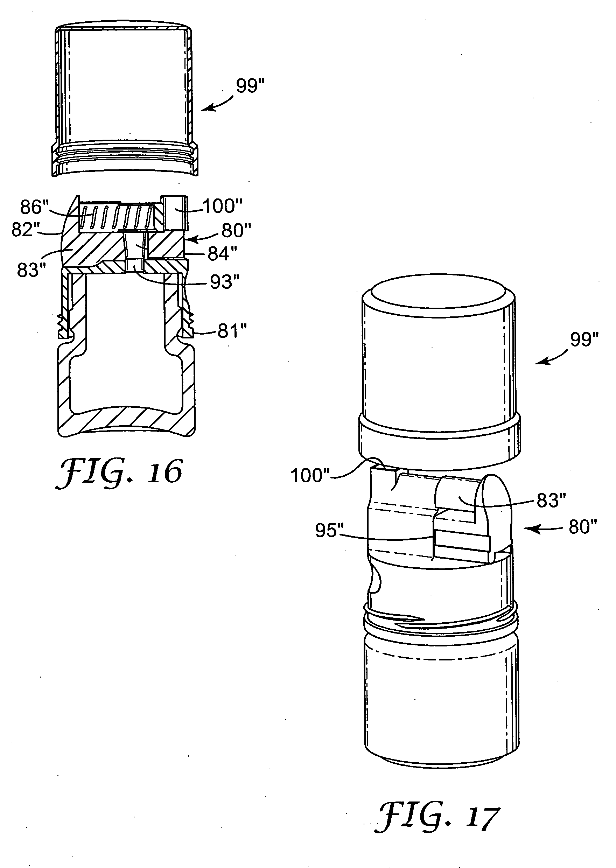

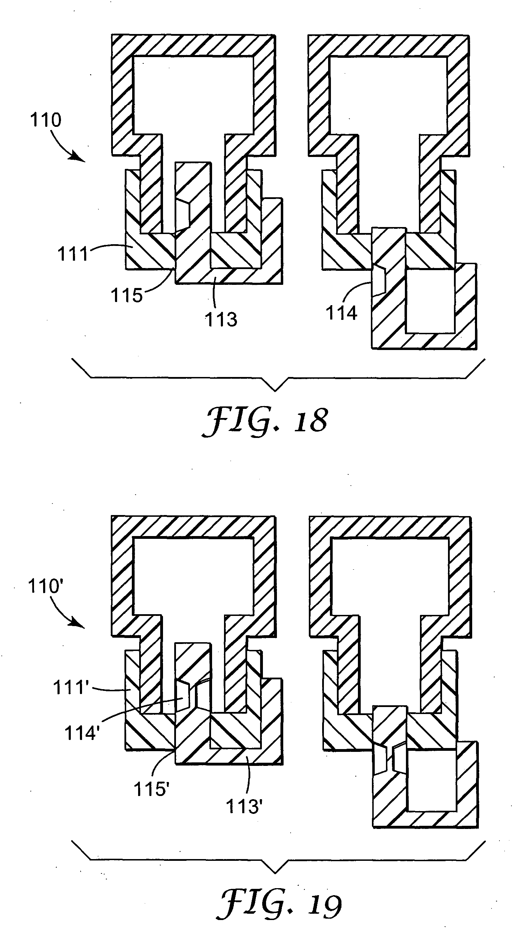

Figs 16 and 17 illustrate a ninth embodiment of a container according to the present invention which in its working principle is similar to the eighth embodiment, previously described, particularly in view of Fig. 10. In more detail, Figs 16 and 17 show a dispensing device 80" with a body member 81" and displaceable member 83". Displaceable member 83" is received in opening 95" of the body member 81". The cavity 84" is provided in the displaceable member 83" and is transverse to the longitudinal axis of movement of the displaceable member 83". Hence, it is preferred that the displaceable 83" is moveable in a direction transverse to the longitudinal axis of the body member 81 " of the dispensing device 80" so that in a first position (shown in Fig. 16), the cavity 84" can be filled from the container, and in a second position (not shown) the material can be dispensed. The dispensing device 80" of this embodiment further comprises an activating element 82", for example a pusher, for moving the displaceable member between its two end positions. The displaceable member is preferably biased by means of a spring element 86" into the closed position or the position in which the cavity can be filled from the container. Fig. 17 shows that the spring element 86" is covered by the elements of the dispensing device 80" and is preferably tightly sealed thereof by a sliding arrangement. When the pusher 82" is activated, i.e. shifted to its end position, passage 100" is aligned with cavity 84". In the non-activated position, cavity 84" is brought out of alignment with passage 100" which provides a tight seal during storage of the container with the dispensing device.

Opening 95" is sealed against the displaceable member 83" for example by means of a tight fit. Alternatively, in its closed position, displaceable member 83" is jammed like a stopper into opening 95". Further alternatively, displaceable member 83" comprises a sealing flange like sealing member 91 shown in Fig. 10, cooperating with a corresponding groove provided in the body member 81 ". The latter two alternatives are advantageous since in comparison to a tight fit less force is required to move the displaceable member.

A cap 99" is preferably provided which can particularly cover the dispensing device 80" in order to avoid any contamination of the material to be dispensed by the environment when the device is not used. In Figs 16 and 17 a screw thread is shown between the cap 99" and the dispensing device 80" which is preferred. However, a locking engagement can also be provided between the cap 99" and any other appropriate element of the device, also by other means, like a bayonet closure or closure provided by sliding movement and a slight elastic deformation between the two elements to be connected.

The embodiment shown in Figs. 16 and 17 is advantageous because the displaceable member 83" does not comprise any members that extend radially beyond the container, at least in one position of the displaceable member 83" (unlike pusher 82' in Fig. 13) so that a cap can be placed onto the displaceable member. A further difference to the embodiment of, e.g., Fig 11 is that the displaceable member 83" is pushed for dispensing a material, and not pulled.

Fig. 18 shows a tenth embodiment of the present invention. The dispensing device 110 comprises body member 111 and displaceable member 113 being movable through opening 115. Displaceable member 113 comprises a bore hole 114 that dispenses the material radially with respect to the (vertical) axis of movement of the displaceable member 113. The bore hole is preferably tapered towards its opening like a cone in order to facilitate dispensing of the material..

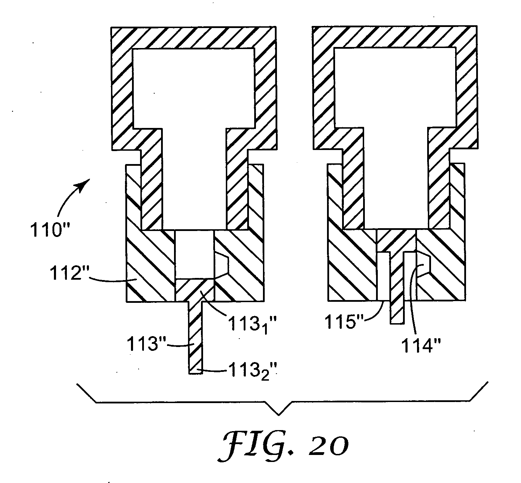

In the alternative design shown in Fig. 19, displaceable member 113' comprises annular groove 114' that is filled with material in the closed position of displaceable member 113' (see left-hand drawing of Fig. 19). Displaceable member 113' is movable through opening 115' along the axis of the container in order to dispense material (right-hand drawing in Fig. 19).

In the alternative shown in Fig. 20, a cavity 114" (alternatively an annular groove) is provided in the body member 112" and not in the displaceable member 113". In this alternative, the displaceable member is tightly sealed against opening 115" at first portion 113₁". Displaceable member 113" further comprises second portion 113₂" having a reduced diameter compared to first portion 113₁" so that in the closed position of displaceable member 113" (see right-hand drawing of Fig. 20), material contained in cavity 114" can be dispensed. In the other position of displaceable member 113" (see left-hand drawing of Fig. 20), cavity 114" can be filled from the container.

## Claims

1. A device for dispensing a material from a container, comprising at least one displaceable member being displaceable between a first position and a second position, said displaceable member having at least one cavity being alternately filled in said first position and emptied in said second position, wherein said displaceable member is tightly sealed against said container.

2. The device of claim 1, wherein said displaceable member is moveably accommodated in a body member of said device, said body member being connectable to said container.

3. The device of claim 2, wherein the body member comprises a longitudinal axis, the displaceable member being moveable along an axis being inclined with respect to said longitudinal axis of said body.

4. The device of claim 3, wherein the displaceable member is moveable in a direction transverse to said longitudinal axis of said body member.

5. The device of claim 2, 3 or 4, said displaceable member having an axis of movement, said at least one cavity being inclined with respect to said axis of movement of said displaceable member.

6. The device of claim 5, said at least one cavity being arranged transverse to said axis of movement of said displaceable member.

7. The device of any of claims 2-6, the displaceable member extending along its axis of movement, and comprising at a first end thereof a circumferential sealing member for sealing said displaceable member against said body member once the displaceable member is fully accommodated in said body member.

8. The device of claim 7, wherein the sealing member comprises a circumferential flange engaging a corresponding circumferential groove provided at said body member.

9. The device of claim 8, wherein the circumferential flange is substantially L-shaped, and extends from that first end of the displaceable member along said axis of movement.

10. The device of any of claims 2-9, further comprising an activating element for moving said displaceable member.

11. The device of claim 10, wherein the activating element is substantially U-shaped with the legs of the U being connected to said displaceable member.

12. The device of any of claims 2-11, said displaceable member further comprising at a first end thereof a web element being arranged transverse to said axis of movement of said displaceable member.

13. The device of claim 12, wherein the two ends of said web element extend beyond the circumference of the displaceable member, said activating element being connected to said extending ends of said web element.

14. The device of any of claims 2-13, further comprising a retaining element for urging said displaceable member back to its fully accommodated position.

15. The device of claim 14, wherein said retaining element is an O-ring or elastic band.

16. The device of claim 15, wherein the retaining element is connected to said displaceable member in the area of its first end, and surrounding said body member.

17. The device of any of claims 2-16, further comprising a locking element for releasable locking the displaceable member and for generating an additional sealing pressure to said body in its accommodated position.

18. The device of any of claims 2 to 17 having only two openings to the exterior of the device.

19. The device of any of claims 2 to 6, said body member further comprising an outlet opening being alignable with said cavity for dispensing the material.

20. The device of claim 19, further comprising a retaining element for urging said displaceable member back to its fully non-dispensing position

21. The device of claim 1, further comprising a body member, and a fixing member, said displaceable member being a rotor, said fixing member being provided for fixing said rotor to said body member such that said rotor is freely rotatable.

22. The device of claim 21, wherein said body member comprises an upper end and a bottom end connected by a circumferential wall, said bottom end being adapted to be mounted on said container, said upper end comprising a radially extending ring shaped portion and an axially extending center rod, said ring shaped portion and said center rod being connected by a ring shaped recess for a ring shaped chamber around said center rod.

23. The device of claim 22, the bottom of said ring shaped recess comprising an opening for forming a passage to the interior of said container.

24. The device of claim 22 or 23, said rotor comprising a disk shaped plate portion comprising a center hole for alignment with said center rod of said body member, and an axially extending circumferential wall.

25. The device of claim 24, said plate portion of said rotor comprising a plurality of cavities being at one end thereof alignable with said opening in said ring shaped recess of said body member.

26. The device of any of claims 21-25, said fixing member comprising a central fixing element for fixing said fixing member to said body member through said center hole of said rotor.

27. The device of any of claims 21-26, said fixing member comprising at least one eccentric aperture.

28. The device of claim 27, said fixing element being arranged such that a cavity of said rotor being aligned with said opening in said body member is at that time covered by said fixing member.

29. The device of claim 27 or 28, wherein said aperture allows a cavity not being aligned with said opening in said body member to be exposed to the exterior of said device.

30. The device of any of claims 25-29, wherein said cavities are filled and emptied sequentially while said rotor is turned.

31. The device of any of claims 21-30, said body member further comprising at least one positioning detent for defining a dosing position of said rotor.

32. A device for dispensing a material from a container, comprising at least one displaceable member being displaceable between a first position and a second position, said container having at least one cavity being alternately filled in said first position and emptied in said second position, wherein said displaceable member is tightly sealed against said container.

33. The device of claim 32, wherein said displaceable member is moveably accommodated in a body member of said device, said body member being connectable to said container and having at least one cavity.

34. The device of claim 33, wherein displaceable member is tightly sealed against said body member.

35. The device of any of the preceding claims, wherein the material to be dispensed is pulverulent and/or granular.

36. The device of any of the preceding claims, wherein the material is dispensed batch-wise.

37. Use of the dispensing device of any of claims 1 to 36 for dispensing pulverulent and/or granular materials, such as glass ionomers, glass ionomer cements, resin modified glass ionomers, composite materials, epoxide materials, chelate cements, carboxylate cements, alginate materials, biochemical granules, or granules used in biochemical products.

38. Use of the dispensing device of any of claims 1 to 37 for dispensing pulverulent and/or granular materials having grain sizes in the range of d50 = 20 - 130 µm.

## Amended claims

### Amended claims in accordance with Rule 86(2) EPC.

**1.** A device for dispensing a material from a container, comprising at least one displaceable member being displaceable between a first position and a second position, said displaceable member having at least one cavity being alternately filled in said first position and emptied in said second position, wherein said displaceable member is tightly sealed against said container,and wherein said displaceable member is moveably accommodated in a body member of said device, said body member having only one opening to the exterior of said device and one opening to the interior of said container.

**2.** The device of claim 1, wherein said body member is connectable to said container.

**3.** The device of claim 1 or 2, wherein the body member comprises a longitudinal axis, the displaceable member being moveable along an axis being inclined with respect to said longitudinal axis of said body.

**4.** The device of claim 1 or 2, wherein the body member comprises a longitudinal axis, the displaceable member being moveable in a direction transverse to said longitudinal axis of said body member.

**5.** The device of claim 2, 3 or 4, said displaceable member having an axis of movement, said at least one cavity being inclined with respect to said axis of movement of said displaceable member.

**6.** The device of claim 2, 3, or 4, said displaceable member having an axis of movement, said at least one cavity being arranged transverse to said axis of movement of said displaceable member.

**7.** The device of any of claims 2-6, the displaceable member extending along its axis of movement, and comprising at a first end thereof a circumferential sealing member for sealing said displaceable member against said body member once the displaceable member is fully accommodated in said body member.

**8.** The device of claim 7, wherein the sealing member comprises a circumferential flange engaging a corresponding circumferential groove provided at said body member.

**9.** The device of claim 8, wherein the circumferential flange is substantially L-shaped, and extends from that first end of the displaceable member along said axis of movement.

**10.** The device of any of claims 2-9, further comprising an activating element for moving said displaceable member.

**11.** The device of claim 10, wherein the activating element is substantially U-shaped with the legs of the U being connected to said displaceable member.

**12.** The device of any of claims 2-11, said displaceable member further comprising at a first end thereof a web element being arranged transverse to said axis of movement of said displaceable member.

**13.** The device of claim 12, wherein the two ends of said web element extend beyond the circumference of the displaceable member, said activating element being connected to said extending ends of said web element.

**14.** The device of any of claims 2-13, further comprising a retaining element for urging said displaceable member back to its fully accommodated position.

**15.** The device of claim 14, wherein said retaining element is an O-ring or elastic band.

**16.** The device of claim 15, wherein the retaining element is connected to said displaceable member in the area of its first end, and surrounding said body member.

**17.** The device of any of claims 2-16, further comprising a locking element for releasable locking the displaceable member and for generating an additional sealing pressure to said body in its accommodated position.

**18.** A device for dispensing a material from a container, comprising at least one displaceable member being displaceable between a first position and a second position, wherein said displaceable member is moveably accommodated in a body member of said device, said body member having at least one cavity being alternately filled in said first position and emptied in said second position, wherein said displaceable member is tightly sealed against said body member, said body member having only one opening to the exterior of said device and one opening to the interior of said container.

**19.** The device of claim 18, , said body member being connectable to said container.

**20.** The device of any of the preceding claims, wherein the material to be dispensed is pulverulent and/or granular.

**21.** The device of any of the preceding claims, wherein the material is dispensed batch-wise.

**22.** Use of the dispensing device of any of claims 1 to 21 for dispensing pulverulent and/or granular materials, such as glass ionomers, glass ionomer cements, resin modified glass ionomers, composite materials, epoxide materials, chelate cements, carboxylate cements, alginate materials, biochemical granules, or granules used in biochemical products.

**23.** Use of the dispensing device of any of claims 1 to 21 for dispensing pulverulent and/or granular materials having grain sizes in the range of d50 = 20 - 130 µm.
